# EUROPÄISCHE PATENTSCHRIFT

(11) **EP 0 710 503 B1**
(45) Veröffentlichungstag und Bekanntmachung des Hinweises auf die Patenterteilung: **20.05.1998**
(21) Anmeldenummer: 95250238.3
(22) Anmeldetag: 28.09.1995
(51) Int. Cl.: B03B 9/06

(54) **Verfahren und Vorrichtung zur biologisch-mechanischen Behandlung von Abfall**
Method and plant for the biological-mechanical treatment of waste
Procédé et installation pour le traitement biologique-mécanique des déchets

(30) Priorität: 28.09.1994 DE 4434611
(43) Veröffentlichungstag der Anmeldung: 08.05.1996
(73) Patentinhaber: Steinbrecher & Partner Ingenieurgesellschaft mbH, 39590 Tangermünde (DE)
(72) Erfinder:
(74) Vertreter: Scholz, Hartmut, Dipl.-Ing. Patentanwalt

(56) Entgegenhaltungen:
- WO-A-94/15892
- CH-A- 352 295
- DE-A- 2 821 951
- DE-A- 3 248 494
- BWK BRENNSTOFF WARME KRAFT, Bd. 43, Nr. 10, Oktober 1991 DUSSELDORF DE, Seiten v4,v7-v8,v11-v12, HOPPENHEIT ET AL: 'Abfallaufbereitungstechnik als Bestandteil eines integrierten Abfallwirtschaftkonzeptes'

## Beschreibung

Die Erfindung betrifft ein Verfahren und eine Vorrichtung zur Aufbereitung und Beseitigung von Abfall, bei dem der angelieferte eine mineralische, eine organische und eine organische Kunststoffbestandteile beinhaltende Fraktion enthaltende Abfall gesichtet, zerkleinert und homogenisiert wird und anschließend in einer Rotte einem biologischen Rotteprozeß unterzogen wird.

Abfall ist ein äußerst komplexer, inhomogener Stoff, der sich aus Hausmüll, Gewerbemüll, Bauschutt, Industrieabfällen usw. zusammensetzt, sofern diese Stoffe nicht toxisch sind. Toxische Stoffe sind Sondermüll und als solche eine Sonderbehandlung zu unterziehen. Ein derartiges inhomogenes Stoffgemenge kann nicht ohne weiteres auf einer Deponie endgelagert oder in einer Verbrennungsanlage einer thermischen Behandlung unterzogen werden. In Deponien besteht die Gefahr des Eluierens durch Regenwasser und das Eindringens von Eluaten in das Grundwasser. Insbesondere sind Schwermetallverbindungen aufgrund ihrer toxischen Wirkung auf das Grundwasser problematisch, aber auch Leichtmetallverbindungen, insbesondere Aluminiumverbindungen, wie sie beispielsweise als Beschichtung für Verpackungen verwendet werden, sind sehr reaktiv und thermisch instabil.

Aus der DE 36 34 476 C2 ist es dazu bekannt, den Hausmüll zu kompostieren und den Schwermetallanteil durch Beimengung von Papier zu verringern.

Abfall mit einem hohen Anteil an Biomasse kann auch durch Kompostierung entsorgt und einer zumindest teilweisen Wiederverwendung zugeführt werden.

Dazu ist es aus der CH 352 295 bekannt, den Müll zunächst insgesamt zu zermahlen, von eisenhaltigen Bestandteilen zu befreien und dann in eine leichtere, weiche und eine schwerere, harte Fraktion zu trennen. Die Stofftrennung dient dabei der Spezialisierung der Mühlen und wird nach dem Vermahlen wieder rückgängig gemacht.

Aus der US 37 36 111 schließlich ist es bekannt, Abfall unter Einsatz biologischer Abbauvorgänge nach Naßaufschluß in einem Pulper zu kompostieren.

Aus der WO 94 15 892 A ist ein Verfahren zu Naßseparierung von Abfall bekannt. Hierbei wird der Abfall durch Zentrifugalkräfte oder durch Sedimentationskräfte innerhalb der Flüssigkeit getrennt. Dieses Verfahren wird mehrfach hintereinander angewandt.

Aus der DE 32 48 494 A1 ist ein Verfahren zur Vorbereitung von Abfall für eine Müllverbrennungsanlage bekannt. Hierbei wird der Müll zerkleinert, ggfs. einer Kompostierungsanlage zugeführt, mit anderen Abfallsorten gemischt, um dann verbrannt zu werden.

Aus der DE 28 21 951 OS ist ein Verfahren zur Müllverwertung bekannt, bei dem der Abfall zerkleinert und mit Wasser versetzt wird, um dann ohne Wasseraustritt zusammengepreßt zu werden. Der gepreßte Abfall wird danach einem Verrottungsprozeß unterzogen.

Üblich ist auch die Verbrennung von Abfall oder Abfallrückständen. Hierbei können jedoch toxische Stoffe, insbesondere Dioxine, entstehen, die einerseits sehr hohe Verbrennungstemperaturen, andererseits spezielle Filter benötigen. Zusätzlich besteht dann das Problem der Beseitigung der Schlacken und Filterstäube aus den Müllverbrennungsanlagen.

Aufgabe der vorliegenden Erfindung ist es, ein Verfahren und eine Vorrichtung zu schaffen, mit dem Abfall weitgehend aufgearbeitet und in eine deponierbare und eine verbrennbare Fraktion separiert werden kann, sowie eine Vorrichtung zur Durchführung dieses Verfahrens zur Verfügung zu stellen.

Gelöst wird diese Aufgabe durch ein Verfahren gemäß dem Patentanspruch 1, das durch eine dem Anspruch 6 entsprechende Abfallverwertungsanlage ausgeführt wird.

Durch diese Maßnahmen wird ein Verfahren geschaffen, mit dem Müll vollständig in problemlos weiter verarbeitbaren Fraktionen separiert werden kann. Nach der Rottung erfolgt eine Naßseparierung. Durch die Rottung, die durch sogenannte Biopuster beschleunigt werden und ca. 6 bis 12 Monate dauern kann, werden die vorhandenen Biomasseanteile des Mülls weitgehend biologisch zu nicht mehr reaktiven Huminstoffen abgebaut.

Das Rotteprodukt besteht nunmehr aus anorganischen Bestandteilen, überwiegend aus Quarz und Huminstoff, die mit organischen Bestandteilen vermischt sind. In einer Naßseparierung werden die anorganischen Bestandteile von den organischen Bestandteilen getrennt. Die organischen Bestandteile sind leichter und schwimmen auf, wo sie mit entsprechenden Hilfsmitteln von der Wasseroberfläche abgezogen werden können. Die schwereren Quarzbestandteile dagegen setzen sich ab und können deponiert werden.

Die abgezogenen organischen Bestandteile können noch eine sehr große Bandbreite unterschiedlicher Materialien und Eigenschaften beinhalten und werden deshalb anschließend einer weiteren Behandlung unterzogen. Hier hat es sich als vorteilhaft eine Zerkleinerung der Kunstoffteile, die aus Haushaltsverpackungen, aber auch aus Industrieabfällen bestehen können, erwiesen. Als besonders vorteilhaft hat sich eine Zerkleinerung mittels Wasserstrahl erwiesen.

Anschließend werden die zerkleinerten Bestandteile einer weiteren Separierung, insbesondere einer Windsichtung unterzogen, wo sie nach unterschiedlichen physikalischen Eigenschaften separiert werden; so sind beispielsweise chlorhaltige Kunststoffe schwerer als reine Kohlenwasserstoff-Kunsttoffe. Derartige windgesichteten reinen Kohlenwasserstoff-Kunststoffe sind wertvolle Brennstoffe, beispielsweise für Heizkraftwerke, und können so gewinnbringend entsorgt werden. Hausmüll wird deshalb nicht wegen der Recycelbarkeit der Rohstoffe getrennt gesammelt, sondern um eine möglichst homogene Kunststoffmüllfraktion zu bekommen.

Eine Anlage zur Durchführung eines derartigen Müllaufbereitungsverfahrens sieht eine Siebanlage, eine Rotteanlage, eine Naßseparierung und eine die naßseparierten Rotteprodukte entwässernde Entwässerungsanlage vor.

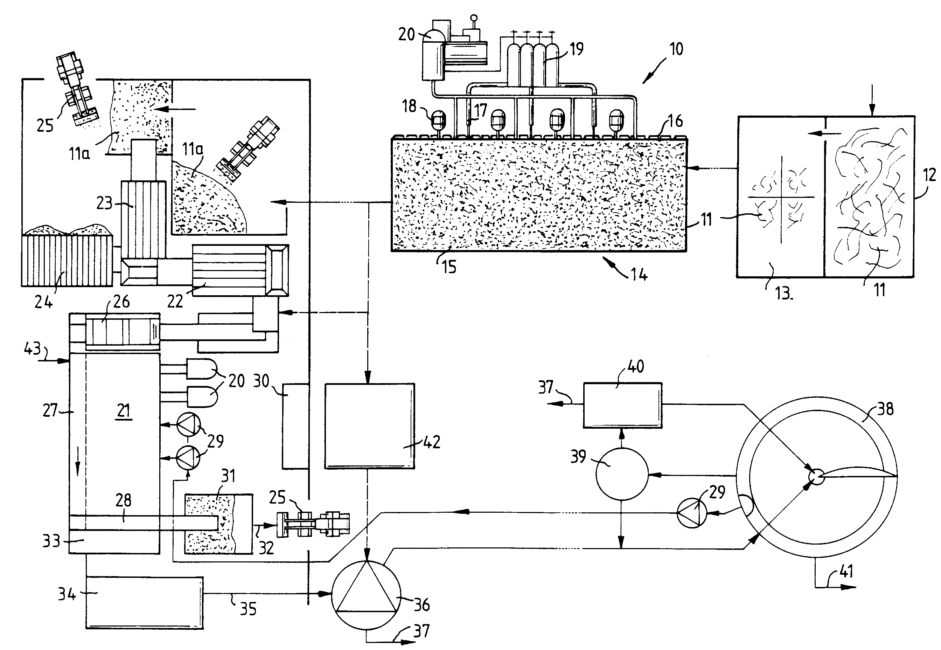

Weitere vorteilhafte Maßnahmen sind in den übrigen Unteransprüchen beschrieben. Die Erfindung ist anhand eines Ausführungsbeispieles in der beiliegenden Zeichnung dargestellt und wird nachfolgend näher beschrieben.

Die in der einzigen Figur schematisch dargestellte Müllaufbereitungsanlage 10 dient der Aufbereitung von Müll 11 und besteht im wesentlichen aus einer Anlieferung 12 mit einer Homogenisierung 13, einer Rotteanlage 14 und einer Separierung, vorzugsweise einer Naßseparierung 21. In der Anlieferung 12 wird der angelieferte Müll 11 gesichtet, vorzerkleinert und vermischt. In der sich anschließenden Homogenisierung 13 wird der Müll 11 gesiebt, weiter zerkleinert, ggf. mit Klärschlamm vermischt und homogeniesiert. Dabei fallen bereits große Mengen deponierfähiger Bestandteile an, beispielsweise Quarzsande und Tone, die nicht weiter aufgearbeitet werde müssen.

Nach der Homogenisierung wird der Müll 11 auf einem Rottebett 15 der Rotteanlage 14 für ca. 6 bis 12 Monate einer biologischen Aufbereitung durch Verrottung unterzogen. Eine derartige Rotteanlage 14 kann bis zu zehn Meter hoch und über hundert Meter lang und breit sein. Zur Beschleunigung der Verrottung kann der Müll 11 über Druck- und Sauglanzen 17 mit Sauerstoff 19 belüftet werden. Dabei vollzieht sich abwechselnd ein ärober und ein anärober biologischer Abbau. Dieser biologische Abbau kann durch sogenannte Biopuster 18 verstärkt werden. Der Müll 11 ist dabei durch eine Abdeckung 16 gegenüber der Umgebung abgedeckt und abgedichtet.

Nach Abschluß der Rottung wird das nunmehrige Rotteprodukt 11a, bei dem in der Rotteanlage 14 jetzt alle abbaubaren Bestandteile, beispielsweise Eiweiße usw., biologisch zu nicht mehr wasserlöslichen Produkten abgebaut worden sind, der Naßseparierung 21 zugeführt. Dazu wird es in einer vorgeordneten Feinsiebanlage 22, einer Grobsiebanlage 23 und einem Windsichter 24 nach Größe und Dichte grob vorsortiert.

Die so nach ihrer Größe separierten Fraktionen können nun beispielsweise mit einem Radlader 25 über eine Aufgabe 26 der Naßseparierung 21 zur weiteren Separierung aufgegeben werden. Die schweren anorganischen Bestandteile, überwiegend Sand, Huminstoff und Ton, können über eine Schwerstoffschleuse 28 abgezogen, in einer Anorganik 31 gesammelt und auf einer Deponie 32 (Pfeil) endgelagert werden.

In die Naßseparierung 21 wird mit Kompressoren 20 von unten Druckluft eingeblasen, wodurch die leichteren organischen Bestandteile, überwiegend Kunststoffteile aufschwimmen. Die durch diese sog. Flotation aufgetriebenen organischen Bestandteile können über einen Überlauf 27 abgezogen und einer Organiksammlung 33 zugeführt und in einem Entwässerungscontainer 34 entwässert werden.

Die aus dem Entwässerungscontainer 34 kommende Organik kann mit einer Siebtrommel 36 separiert und fraktioniert werden. Die dabei anfallenden kleinen Kunststoffteile können ohne weitere Aufbereitung als wertvoller Brennstoff einer Verbrennung 37 (Pfeil) zugeführt werden.

Die größeren Kunststoffteile können mit einer Zerkleinerungsanlage, vorzugsweise einer mit Wasserstahl arbeitenden Zerkleinerungsanlage 42 noch weiter zerkleinert werden. Dabei werden durch die Scherkräfte der sehr feinen und starken Wasserstrahlen die sich üblicherweise bildenden Taschen aufgeschnitten und die Anhaftungen von den anorganischen Stoffen abgetrennt.

Das aus der Naßseparierung 21 kommende Wasser kann über Leitungen 35 einer Vorentwässerung 39 und einem Absatzbecken 38 zugeführt werden, wo evtl. mitgenommene Bestandteile abgeschieden werden. Der Vorentwässerung 39 ist eine Siebbandpresse 40 nachgeordnet, mit der die Absatzprodukte entwässert und zurückgewonnen werden können. Das dabei entzogene Wasser kann mit Pumpen 29 wieder zurück in die Naßseparierung 21 gepumpt werden.

Das Wasser wird mit Pumpen 29 im Kreislauf umgewälzt und ist frei von Schadstoffbelastungen. Durch unterschiedliches Einbringen der Rotteprudukte 11a in die Naßseparierung 21 kommt es aber zu Schwankungen in Wasserbedarf und überschüssiges Wasser kann dem Abwasser 41 (Pfeil) zugeführt werden. Das so abgegebene Wasser kann aus einem Wasserzulauf 43 wieder ergänzt werden.

### Bezugszeichen

- 10: Müllaufbereitung
- 11: Müll
- 11a: Rotteprodukt
- 12: Müllanlieferung
- 13: Homogenisierung
- 14: Rotteanlage
- 15: Rottebett
- 16: Abdeckung
- 17: Drucklanze
- 18: Biopuster
- 19: Sauerstoff
- 20: Kompressor
- 21: Naßseparierung
- 22: Feinsieb
- 23: Grobsieb
- 24: Windsichter
- 25: Radlader
- 26: Aufgabe
- 27: Überlauf
- 28: Schwerstoffschleuse
- 29: Pumpe
- 30: Technikraum
- 31: Anorganik
- 32: Deponie
- 33: Organiksammlung
- 34: Entwässerungscontainer
- 35: Leitung
- 36: Siebtrommel
- 37: Verbrennung
- 38: Absetzbecken
- 39: Vorentwässerung
- 40: Siebbandpresse
- 41: Abwasser
- 42: Schneidvorrichtung
- 43: Wasserzulauf

## Patentansprüche

1. Verfahren zur Aufbereitung und Beseitigung von Abfall, bei dem der angelieferte eine mineralische, eine organische und eine organische Kunststoffbestandteile beinhaltende Fraktion enthaltende Abfall gesichtet, zerkleinert und homogenisiert wird und anschließend in einer Rotte einem biologischen Rotteprozeß unterzogen wird, dadurch gekennzeichnet, daß die vorhandenen Biomasseanteile solange dem Rotteprozeß unterzogen werden, bis sie zu nicht mehr reaktiven Huminstoffen abgebaut sind, das Rotteprodukt nach der Rottung in einer Naßseparierung durch Einblasen von Druckluft separiert wird, wodurch die mineralischen Bestandteile und die Huminstoffe von den organischen Bestandteilen getrennt werden, die abgetrennten organischen Bestandteile entwässert und einer anschließenden Weiterbehandlung zugeführt werden und die nicht mehr reaktiven Huminstoffe und die anorganischen Bestandteile deponiert werden.

2. Verfahren nach Anspruch 1, dadurch gekennzeichnet, daß die unter den organischen Bestandteilen befindlichen Kunststoffe zerkleinert, möglichst pulverisiert, und in schwere und leichte Kunststofffraktionen getrennt werden.

3. Verfahren nach den Ansprüchen 1 und 2, dadurch gekennzeichnet, daß die Stoffe mittels Wasserstrahl von Anhaftungen befreit und zerkleinert werden.

4. Verfahren nach Anspruch 3, dadurch gekennzeichnet, daß die Kunststoffe in einem Windsichter fraktioniert wird.

5. Verfahren nach einem der Ansprüche 1 und 2, dadurch gekennzeichnet, daß die naßseparierten Rotteprodukte mittels einer Siebbandpresse entwässert werden.

6. Abfallaufbereitungsanlage zur Durchführung eines Verfahrens nach Anspruch 1, bestehend aus
- einer Anlieferung (12) zum Sichten und Zerkleinern des Abfalls, (11)
- einer Homogenisierungsanlage (13),
- einer Siebanlage (23,24),
- einer Rotteanlage (14),
- einer Naßseparierung (21) zur Separierung der Rotteprodukte (11a), der durch mindestens einen Kompressor (20) Druckluft zugeführt wird, wodurch die mineralischen Bestandteile und die Huminstoffe von den organischen Bestandteilen getrennt werden
- und einer Entwässerungsanlage (34, 40), die die naßseparierten organischen Rotteprodukte entwässert.

7. Abfallaufbereitungsanlage nach Anspruch 6, dadurch gekennzeichnet, daß die Siebanlage (23, 24) vor der Naßseparierung (21) angeordnet ist, und eine Feinsiebanlage (22), eine Grobsiebanlage (23) und eine Windsichtanlage (24) aufweist.

8. Abfallaufbereitungsanlage nach einem der Ansprüche 6 oder 7, dadurch gekennzeichnet, daß der Naßseparierung (21) eine Schwerstoffschleuse (28) zum Abziehen der Anorganik und eine Organiksammlung (33) zum getrennten Abziehen der organischen Bestandteile zugeordnet sind.

9. Abfallaufbereitungsanlage nach einem der Ansprüche 6 bis 8, dadurch gekennzeichnet, daß der Naßseparierung (21) ein Entwässerungscontainer (34) und eine Siebtrommel (36) zur Trocknung und Trennung der organischen Bestandteile zugeordnet sind.

10. Abfallaufbereitungsanlage nach einem der Ansprüche 6 bis 9, dadurch gekennzeichnet, daß der Naßseparierung (21) ein Absetzbecken (38), eine Vorentwässerung (39) und eine Siebbandpresse (40) nachgeordnet sind.

11. Abfallaufbereitungsanlage nach einem der Ansprüche 6 bis 10, dadurch gekennzeichnet, daß der Rotteanlage (14) über Drucklanzen (17) zusätzlichem Sauerstoff (19) zuführbar ist.

12. Abfallaufbereitungsanlage nach einem der Ansprüche 6 bis 11, dadurch gekennzeichnet, daß der Naßseparierung (21) eine Schneidvorrichtung (42) zugeordnet ist.

13. Abfallaufbereitungsanlage nach einem der Ansprüche 6 bis 12, dadurch gekennzeichnet, daß der Naßseparierung (21) eine Wasserstrahlschneidvorrichtung (42) zugeordnet ist.

## Claims

1. Method for the processing and disposal of waste in which the waste supplied, having a mineral fraction, an organic fraction and an organic fraction containing plastics components, is screened, crushed and homogenised and subsequently undergoes a biological retting process in a retting tank, characterised in that the biomass components present undergo the retting process until they decompose to form humic matter which is no longer reactive, the retting product is separated after retting by blowing in compressed air in a wet-separation process, whereby the mineral components and the humic matter are separated from the organic components, the separated organic components are drained and are subsequently taken for further treatment and the humic matter, which is no longer reactive, and the inorganic components are disposed of.

2. Method according to Claim 1, characterised in that the plastics found among the organic components are crushed, or, if possible, pulverised, and separated into heavy and light plastics fractions.

3. Method according to Claims 1 and 2, characterised in that the materials are freed from adhering substances by means of a water jet and crushed.

4. Method according to Claim 3, characterised in that the plastics are separated into their fractions in an air separator.

5. Method according to either of Claims 1 and 2, characterised in that the wet-separated retting products are drained by means of a screening belt press.

6. Waste processing plant for carrying out a method according to Claim 1, comprising
- a delivery device (12) for screening and crushing the waste (11),
- an homogenising plant (13),
- a screening plant (23, 24),
- a retting plant (14),
- a wet-separation device (21) for separating the retting products (11a), which device is supplied with compressed air by at least one compressor (20), whereby the mineral components and the humic matter are separated from the organic components,
- and a draining plant (34, 40) which drains the wet-separated, organic retting products.

7. Waste processing plant according to Claim 6, characterised in that the screening plant (23, 24) is arranged upstream of the wet-separation device (21) and comprises a fine screening plant (22), a coarse screening plant (23) and an air separation plant (24).

8. Waste processing plant according to either of Claims 6 and 7, characterised in that a sediment sluice (28) for removing the inorganic matter and an organic matter collector (33) for the separate removal of the organic components are associated with the wet-separation device (21).

9. Waste processing plant according to any one of Claims 6 to 8, characterised in that a draining container (34) and a screening drum (36) for drying and separating the organic components are associated with the wet-separation device (21).

10. Waste processing plant according to any one of Claims 6 to 9, characterised in that a sedimentation tank (38), a pre-draining device (39) and a screening belt press (40) are arranged downstream of the wet-separation device (21).

11. Waste processing plant according to any one of Claims 6 to 10, characterised in that additional oxygen (19) can be supplied to the retting plant (14) via pressurised lances (17).

12. Waste processing plant according to any one of Claims 6 to 11, characterised in that a cutting device (42) is associated with the wet-separation device (21).

13. Waste processing plant according to any one of Claims 6 to 12, characterised in that a water jet cutting device (42) is associated with the wet-separation device (21).

## Revendications

1. Procédé pour traiter et éliminer des déchets, selon lequel les déchets collectés contenant une fraction minérale, une fraction organique et une fraction organique renfermant des éléments en matière plastique sont triés, broyés et homogénéisés, puis soumis dans un pourrissoir à une dégradation biologique, caractérisé en ce que les éléments de biomasse sont soumis au pourrissage jusqu'à ce qu'ils se soient dégradés en humine qui ne soit plus réactive, en ce que le produit issu du pourrissage est ensuite trié dans un dispositif de triage en milieu humide par insufflation d'air comprimé, ce qui sépare les composants minéraux et les humines des composants organiques, en ce que les composants organiques triés sont desséchés et alimentent un dispositif de traitement ultérieur, et en ce que les humines qui ne sont plus réactives et les composants inorganiques sont mis en décharge.

2. Procédé selon la revendication 1, caractérisé en ce que les matières plastiques mélangées aux composants organiques sont broyées, si possible réduites en poudre, puis triées en fractions de matières plastiques lourdes et légères.

3. Procédé selon les revendications 1 et 2, caractérisé en ce que les matières sont libérées de leurs adhérences et broyées au moyen d'un jet d'eau.

4. Procédé selon la revendication 3, caractérisé en ce que les matières plastiques sont fractionnées dans un séparateur à vent.

5. Procédé selon l'une des revendications 1 et 2, caractérisé en ce que les produits issus du pourrissage et triés en milieu humide sont desséchés au moyen d'une presse à bande-tamis.

6. Installation pour le traitement des déchets destinée à mettre en oeuvre le procédé selon la revendication 1, composée
- d'une arrivée (12) pour trieret broyer les déchets (11),
- d'un dispositif d'homogénéisation (13),
- d'un dispositif de criblage (23, 24),
- d'un dispositif de pourrissage (14),
- d'un dispositif de triage en milieu humide (21) pour séparer les produits issus du pourrissage (11a), qui est alimenté en air comprimé par au moins un compresseur (20), ce qui sépare les composants minéraux et les humines des composants organiques,
- et d'un dispositif de dessiccation (34, 40) qui dessèche les produits organiques issus du pourrissage qui ont été triés en milieu humide.

7. Installation pour le traitement des déchets selon la revendication 6, caractérisée en ce que le dispositif de criblage (23, 24) précède le dispositif de triage en milieu humide (21) et comporte un dispositif de criblage fin (22), un dispositif de criblage grossier (23) et un séparateur à vent (24).

8. Installation pour le traitement des déchets selon la revendication 6 ou 7, caractérisée en ce qu'un dispositif de retenue pour les matières denses (28) destiné à extraire les matières inorganiques et un collecteur de matières organiques (33) destiné à extraire les composants organiques sont associés au dispositif de triage en milieu humide (21).

9. Installation pour le traitement des déchets selon l'une des revendications 6 à 8, caractérisée en ce qu'une cuve de dessiccation (34) et un tambour de criblage (36) destinés à dessécher et à trier les composants organiques sont associés au dispositif de triage en milieu humide (21).

10. Installation pour le traitement des déchets selon l'une des revendications 6 à 9, caractérisée en ce qu'un bassin de décantation (38), un dispositif de dessiccation préalable (39) et une presse à bande-tamis (40) sont placés en aval du dispositif de triage en milieu humide (21).

11. Installation pour le traitement des déchets selon l'une des revendications 6 à 10, caractérisée en ce que le pourrissoir (14) peut être alimenté en oxygène supplémentaire (19) par le biais de conduites sous pression (17).

12. Installation pour le traitement des déchets selon l'une des revendications 6 à 11, caractérisée en ce qu'un dispositif de coupe (42) est associé au dispositif de triage en milieu humide (21).

13. Installation pour le traitement des déchets selon l'une des revendications 6 à 12, caractérisée en ce qu'un dispositif de coupe à jet d'eau (42) est associé au dispositif de triage en milieu humide (21).
